# EUROPEAN PATENT SPECIFICATION

(11) **EP 3 934 936 B1**
(45) Date of publication and mention of the grant of the patent: **28.02.2024**
(21) Application number: 19713915.7
(22) Date of filing: 08.03.2019
(51) Int. Cl.: B60Q 1/34

(54) **SIGNALING FOR TURNS FOR AUTONOMOUS VEHICLES**
WENDESIGNALSIGNALISIERUNG FÜR AUTONOME FAHRZEUGE
SIGNALISATION POUR DES VIRAGES POUR DES VÉHICULES AUTONOMES

(43) Date of publication of application: 12.01.2022
(73) Proprietor: Waymo LLC, Mountain View, CA 94043 (US)
(72) Inventor: KUNZ, Tobias, Mountain View, CA 94043 (US)
(74) Representative: Anderson, Oliver Ben
(86) International application number: PCT/US2019/021360
(87) International publication number: WO 2020/185197

(56) References cited:
- EP-A2- 0 881 613
- WO-A1-2012/166475
- WO-A1-2018/165096
- DE-A1- 10 251 357
- DE-A1-102006 049 141
- JP-A- 2006 242 905
- KR-B1- 101 890 677
- US-A1- 2012 271 510

## Description

### BACKGROUND

Autonomous vehicles, such as vehicles which do not require a human driver when operating in an autonomous driving mode, may be used to aid in the transport of passengers or items from one location to another. An important component of an autonomous vehicle is the perception system, which allows the vehicle to perceive and interpret its surroundings using sensors such as cameras, radar, LIDAR sensors, and other similar devices. For instance, the perception system and/or the vehicle's computing devices may process data from these sensors in order to identify objects as well as their characteristics such as location, shape, size, orientation, heading, acceleration or deceleration, type, etc.

US 2012/271510 A1 discloses a turn signal control system for use with a right turn signal and a left turn signal of a motor vehicle, and a vehicle navigation system. The turn signal system includes a processor configured to be operably coupled to the vehicle navigation system. The processor is configured to receive map data and route data from the vehicle navigation system. The processor is configured to determine a turn zone of the vehicle based on a set of criteria. A turn signal controller is operably coupled to the processor and configured to activate one of the right and left turn signals when the vehicle is in the turn zone. A method of controlling a right and left turn signal is also provided.

JP 2006 242905 A discloses a driving support device and a driving support method capable of flashing a directional indicator lamp at the proper time.

EP 0 881 613 A2 discloses a method for detecting the point in time for the actuation of turn signal lights in vehicles.

DE 10 2006 049141 A1 discloses a directional indicator system for a motor vehicle.

### BRIEF SUMMARY

The claims define the matter for protection.

This specification describes a method of signaling for turns for a vehicle having an autonomous driving mode. The method includes receiving, by one or more processors, a trajectory that the vehicle will follow for some period of time into the future; processing, by the one or more processors, at least a portion of the trajectory to identify a turning event, the turning event corresponding to a location where the vehicle plans to turn and for which the vehicle will need to use a turn signal; determining, by the one or more processors, whether the trajectory includes a negative turning event located some threshold distance before the turning event, the negative turn event corresponding to a location along the trajectory where the vehicle could make a turn, but does not plan to make a turn; and while the vehicle is operating in the autonomous driving mode, activating, by the one or more processors, the turn signal of the vehicle based on the turning event and the determination.

In one example, processing at least the portion of the trajectory includes traversing the trajectory starting from a point along the trajectory and moving towards some point in the future along the trajectory. In another example, the determination indicates that the trajectory includes the turning event, the method further comprises determining a direction for the negative turning event, and wherein activating the turn signal of the vehicle is further based on the direction for the negative turning event. In another example, activating the turn signal of the vehicle is further based on a chronological order to the turning event and the negative turning event with respect to the at least the portion of the trajectory. In another example, the method also includes processing at least the portion of the trajectory to identify a second turning event; determining a first direction of the negative turning event; determining a second direction of the second turning event; and when the second direction is different from the first direction and while the vehicle is operating in the autonomous driving mode, using the second turning event to activate a second turn signal of the vehicle independent of the suppression. In another example, the method also includes determining the at least the portion of the trajectory based on a current speed of the vehicle. In another example, the method also includes determining the at least the portion of the trajectory based on an amount of time. In another example, the method also includes determining the at least the portion of the trajectory based on an amount of distance along the trajectory. In another example, the positive turning event corresponds to a turn from one road onto another road. In this example, identifying the turning event includes analyzing segments of a roadgraph of map information which the vehicle will traverse when following the trajectory to determine whether the segments meet one or more requirements. In another example, the turning event corresponds to a lane change. In this example, identifying the turning event includes comparing the trajectory to a roadgraph of map information and identifying a deviation from a lane. In another example, the turning event corresponds to the vehicle partially leaving a lane and subsequently returning to the lane. In another example, the turning event corresponds to the vehicle encountering a merge. In another example, the turning event corresponds to the vehicle encountering a lane split. In another example, the turning event corresponds to the vehicle pulling over. In another example, the negative turning event corresponds to a turn onto a road which the vehicle will pass when following the trajectory. In another example, the negative turning event corresponds to a driveway which the vehicle will pass when following the trajectory. According to claim 1, the method includes using the negative turning event to temporarily prevent activation of the turn signal of the vehicle, and determining, based on a type of the turning event, whether to override the temporary prevention and to activate the turn signal of the vehicle.

### BRIEF DESCRIPTION OF THE DRAWINGS

FIGURE 1 is a functional diagram of an example vehicle.
FIGURES 2A and 2B are an example of map information.
FIGURE 3 is an example external view of a vehicle.
FIGURE 4 is an example view of a section of roadway and a trajectory.
FIGURE 5 is an example view of a section of roadway, a trajectory, and positive turning events.
FIGURE 6 is an example view of a section of roadway, a trajectory, and negative turning events.
FIGURE 7 is an example view of a section of roadway, a trajectory, positive turning events, and negative turning events.
FIGURE 8 is an example flow diagram.
FIGURE 9 is another example flow diagram.

### DETAILED DESCRIPTION

### OVERVIEW

The technology relates to determining when to use a turn signal in an autonomous vehicle. Autonomous vehicles may function by generating short term trajectories to follow an overall route to a destination. Many of these trajectories may require the vehicle to make turns. Many different events along the trajectory can trigger a turn signal, such as turns, lane changes, pull-overs, etc. Thus, the autonomous vehicle may need to determine when to use its turn signal as well as for how long. While signaling to make a left or right turn may appear a straightforward task, in certain situations, such as where there are multiple events along a trajectory that may require a turn signal or where there are multiple possible turns and the vehicle is only going to make one of them, signaling too early or too late can create confusion with other drivers or vehicles which can be hazardous in certain situations.

For instance, a planning system of an autonomous vehicle may generate a trajectory for the vehicle to follow in order to follow a route to a destination generated by a routing system of the vehicle. One or more computing devices of the vehicle may then determine whether and when to activate the vehicle's turn signals. In order to do so, the latest trajectory may be traversed or processed starting from a point along the trajectory corresponding to the current location of the vehicle until some point in the future in order to identify positive turning events (which may be possible turning events which may require a turn signal as the vehicle will be turning) as well as a direction for each positive turning event.

The positive turning events may be pre-categorized. For instance, positive turning events may include turns, mergers, pullovers, lane changes, lane splits, and nudging. Each of these categories of positive turning events may be identified in different ways. In addition, the direction of each positive turning event may be determined, for instance, based on a direction of a change in heading of the vehicle during the positive turning event. For instance, with a right turn, the vehicle's heading will be changed towards a right or clockwise direction. Similarly, with a left turn the vehicle's heading will be changed towards a left or counter-clockwise direction.

Each identified positive turning event and its corresponding direction may then be arranged in chronological order according to the trajectory. The computing devices may then activate a vehicle's turn signal according to the order and direction of the positive turning events. A turn signal may be activated for a first positive turning event until that positive turning event is completed. The turn signal for a next positive turning event may not be initiated until the turn signal for a prior positive turning event has been deactivated.

The length of time that the turn signal is activated need not be fixed. For instance, the length of time may be dependent upon the duration of the positive turning event as well as some period of time, some amount of distance, or a combination of these before the positive turning event is account to occur. Thereafter, the turn signal may be activated for the next positive turning event.

In some instances, the vehicle may need to avoid signaling too soon for a turning event. To address this, the computing devices may further analyze the trajectory to identify any "negative turning events". A negative turning event may correspond to a turn onto another road which the vehicle will pass when following the trajectory, or rather a possible turning event where the vehicle will not need to use its turn signal as the vehicle will not be turning.

This processing may be done in conjunction with the aforementioned processing to identify positive turning events. Thus, as noted above, the latest trajectory may be traversed or processed starting from a point along the trajectory corresponding to the current location of the vehicle until some point in the future in order identify any negative turning events. The direction of each negative turning event may be determined, for instance, based on a direction of a change in heading of the vehicle which would have occurred if the vehicle were to actually make the turn corresponding to the negative turning event as described with respect to positive turning events above. For instance, with a right turn, the vehicle's heading will be changed towards a right or clockwise direction. Similarly, with a left turn the vehicle's heading will be changed towards a left or counter-clockwise direction.

The identified negative turning events may be ordered chronologically with the aforementioned identified positive turning events based on the order of the events in according to the trajectory. For instance, the positive turning events and negative turning events may be arranged chronologically starting with the events that are earliest in time along the trajectory.

The computing devices may then use the identified positive and/or negative turning events in order to determine when to activate a vehicle's turn signal. Again, a turn signal may be activated for a first positive turning event until that positive turning event is completed. The turn signal for a next event may not be initiated until the turn signal for a prior event has been deactivated. However, for any negative turning events in the list, the turn signal for the direction of the negative turning event may be suppressed thereby temporarily preventing the turn signal from being activated for a later positive turning event in the same direction as the negative turning event. The suppression may remain in place until the vehicle has reached or passed the turn for the negative turning event. Of course, if the next event in the list is a positive turning event in a direction that is different from the direction of the negative turning event, the turn signal for the positive turning event in the direction that is different could be activated as described above.

The features described herein may allow an autonomous vehicle to activate and deactivate its turn signals in an effective and useful way. These features may allow the vehicle to address situations in which there are multiple events along a trajectory that may require a turn signal as well as situations in which there are multiple possible turns and the vehicle is only going to make one of them. The vehicle may also be prevented from signaling too early or too late, thereby reducing confusion with other drivers or vehicles which can be hazardous in certain situations.

### EXAMPLE SYSTEMS

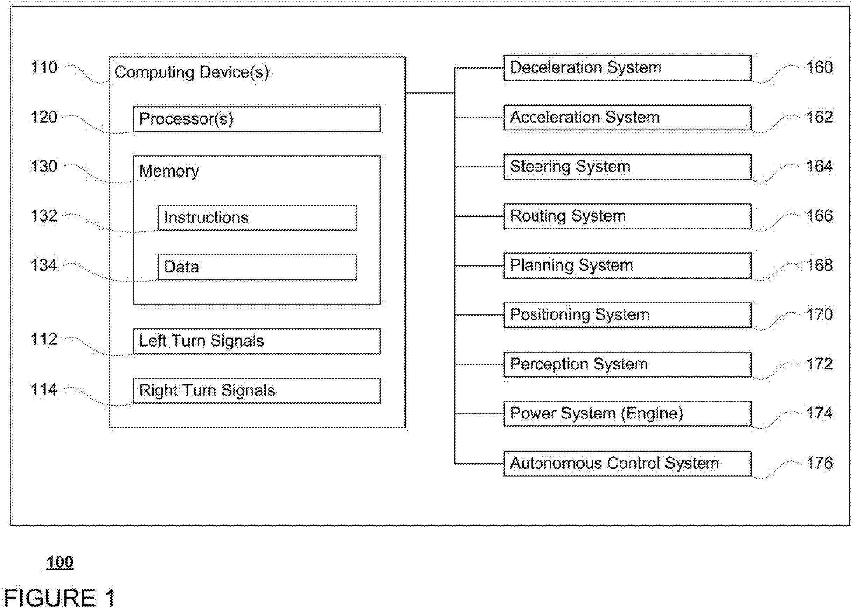

As shown in FIGURE 1, a vehicle 100 in accordance with one aspect of the disclosure includes various components. While certain aspects described herein are particularly useful in connection with specific types of vehicles, the vehicle may be any type of vehicle including, but not limited to, cars, trucks, motorcycles, buses, recreational vehicles, etc. The vehicle may have one or more computing devices, such as computing device 110 containing one or more processors 120, memory 130 and other components typically present in general purpose computing devices.

The memory 130 stores information accessible by the one or more processors 120, including instructions 134 and data 132 that may be executed or otherwise used by the processor 120. The memory 130 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processor 120 may be any conventional processors, such as commercially available CPUs or GPUs. Alternatively, the one or more processors may be a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing device 110. Accordingly, references to a processor or computing device will be understood to include references to a collection of processors or computing devices or memories that may or may not operate in parallel.

In one example, computing device 110 may be part of a signaling system of an autonomous driving computing system incorporated into vehicle 100. In this regard, the signaling system may include or may be configured to send signals to control activation of two or more turn signals of the vehicle, for instance left turn signals 112 and right turn signals 114.

The autonomous control system 176 may include various computing devices, configured similarly to computing devices 110, capable of communicating with various components of the vehicle in order to control the vehicle in an autonomous driving mode. For example, returning to FIGURE 1, the autonomous control system 176 may be in communication with various systems of vehicle 100, such as deceleration system 160, acceleration system 162, steering system 164, routing system 166, planning system 168, positioning system 170, and perception system 172 in order to control the movement, speed, etc. of vehicle 100 in accordance with the instructions 134 of memory 130 in the autonomous driving mode.

As an example, a computing device of the autonomous control system 176 may interact with deceleration system 160 and acceleration system 162 in order to control the speed of the vehicle. Similarly, steering system 164 may be used by autonomous control system 176 in order to control the direction of vehicle 100. For example, if vehicle 100 is configured for use on a road, such as a car or truck, the steering system may include components to control the angle of wheels to turn the vehicle. The autonomous control system 176 may also use the signaling system in order to signal the vehicle's intent to other drivers or vehicles, for example, by lighting turn signals or brake lights when needed.

Routing system 166 may be used by the autonomous control system 176 in order to generate a route to a destination. planning system 168 may be used by computing device 110 in order to follow the route. In this regard, the planning system 168 and/or routing system 166 may store detailed map information, e.g., highly detailed maps identifying the shape and elevation of roadways, lane lines, intersections, crosswalks, speed limits, traffic signals, buildings, signs, real time traffic information, pull over spots vegetation, or other such objects and information.

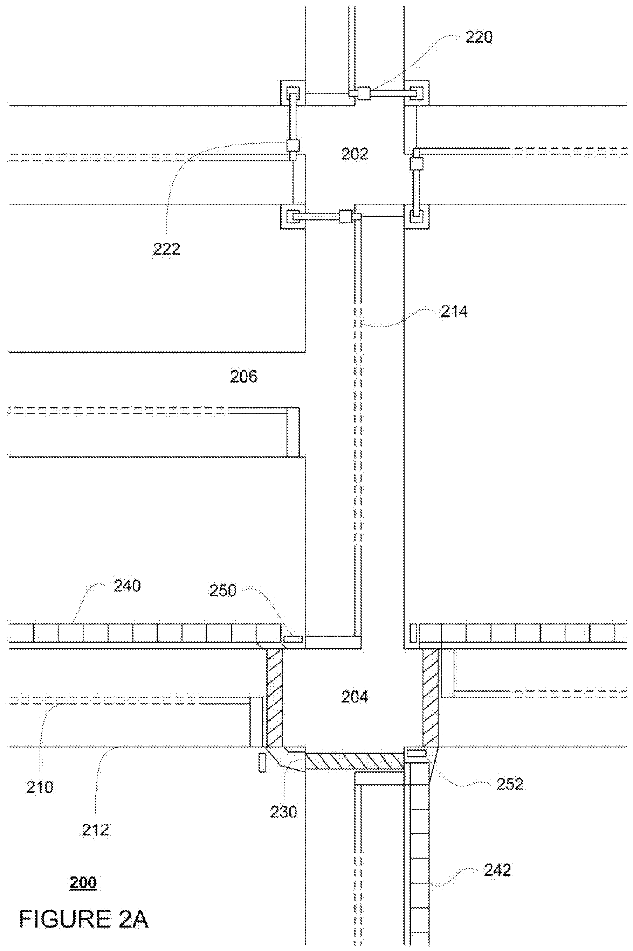

FIGURE 2A is an example of map information 200 for a section of roadway including intersections 202, 204, and side street 206. The map information 200 may be a local version of the map information stored in the memory 130 of the computing devices 110. In this example, the map information 200 includes information identifying the shape, location, and other characteristics of lane lines 210, 212, 214, traffic lights 220, 222, crosswalk 230, sidewalks 240, 242, an stop signs 250, 252. Only a few such features are depicted in FIGURE 2A, however, the map information 200 may include significantly more features and details in order to enable the vehicle 110 to be controlled in the autonomous driving mode.

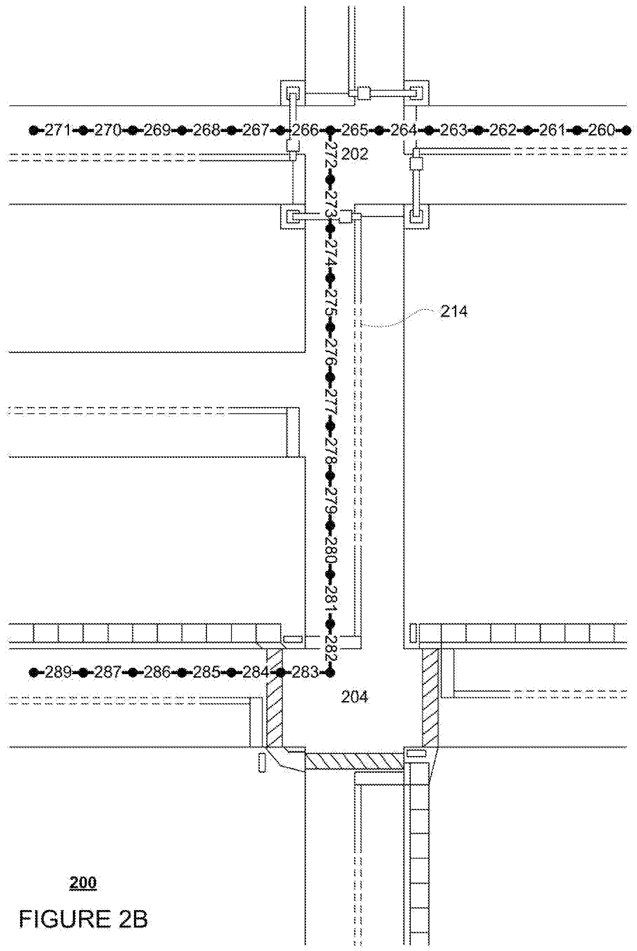

FIGURE 2B is an example of segments 260-289 for a portion of the map information 200. These segments may be discrete portions of drivable road surface, for instance 1 meter or more or less in length. Although only a few segments are shown, the map information may include segments for all or almost all drivable road surfaces. The routing system 166 may use these segments to generate a route, and/or the planning system 168 may use the segments to generate trajectories.

Although the map information is depicted herein as an image-based map, the map information need not be entirely image based (for example, raster). For example, the map information may include one or more roadgraphs or graph networks of information such as roads, lanes, intersections, and the connections between these features which may be represented by road segments. Each feature may be stored as graph data and may be associated with information such as a geographic location and whether or not it is linked to other related features, for example, a stop sign may be linked to a road and an intersection, etc. In some examples, the associated data may include grid-based indices of a roadgraph to allow for efficient lookup of certain roadgraph features.

Positioning system 170 may be used by autonomous control system 176 in order to determine the vehicle's relative or absolute position on a map or on the earth. For example, the position system 170 may include a GPS receiver to determine the device's latitude, longitude and/or altitude position. Other location systems such as laser-based localization systems, inertial-aided GPS, or camera-based localization may also be used to identify the location of the vehicle. The location of the vehicle may include an absolute geographical location, such as latitude, longitude, and altitude as well as relative location information, such as location relative to other cars immediately around it which can often be determined with less noise that absolute geographical location.

The positioning system 170 may also include other devices in communication with the computing devices of the autonomous control system 176, such as an accelerometer, gyroscope or another direction/speed detection device to determine the direction and speed of the vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 110, other computing devices and combinations of the foregoing.

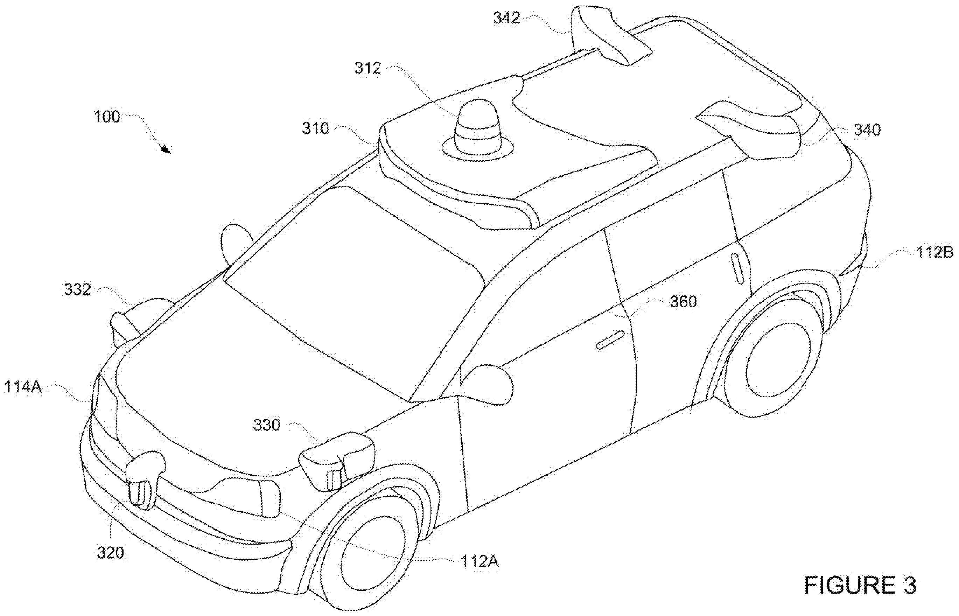

The perception system 172 also includes one or more components for detecting objects external to the vehicle such as other vehicles, obstacles in the roadway, traffic signals, signs, trees, etc. For example, the perception system 172 may include lasers, sonar, radar, cameras and/or any other detection devices that record data which may be processed by the computing devices of the autonomous control system 176. In the case where the vehicle is a passenger vehicle such as a minivan, the minivan may include a laser or other sensors mounted on the roof or other convenient location. For instance, FIGURE 3 is an example external view of vehicle 100. In this example, roof-top housing 310 and dome housing 312 may include a LIDAR sensor as well as various cameras and radar units. In addition, housing 320 located at the front end of vehicle 100 and housings 330, 332 on the driver's and passenger's sides of the vehicle may each store a LIDAR sensor. For example, housing 330 is located in front of driver door 360. Vehicle 100 also includes housings 340, 342 for radar units and/or cameras also located on the roof of vehicle 100. Additional radar units and cameras (not shown) may be located at the front and rear ends of vehicle 100 and/or on other positions along the roof or roof-top housing 310. FIGURE 3 also depicts left and right turn signals 112, 114. In this example, front left turn signal 112A, rear left turn signal 112B, and front right turn signal 114A are depicted, but a right rear turn signal is not visible from the perspective of FIGURE 3.

The autonomous control system 176 may capable of communicating with various components of the vehicle in order to control the movement of vehicle 100 according to primary vehicle control code of memory of the autonomous control system 176. For example, returning to FIGURE 1, the autonomous control system 176 may include various computing devices in communication with various systems of vehicle 100, such as deceleration system 160, acceleration system 162, steering system 164, routing system 166, planning system 168, positioning system 170, perception system 172, and power system 174 (i.e. the vehicle's engine or motor) in order to control the movement, speed, etc. of vehicle 100 in accordance with the instructions 134 of memory 130.

The various systems of the vehicle may function using autonomous vehicle control software in order to determine how to and to control the vehicle. As an example, a perception system software module of the perception system 172 may use sensor data generated by one or more sensors of an autonomous vehicle, such as cameras, LIDAR sensors, radar units, sonar units, etc., to detect and identify objects and their characteristics. These characteristics may include location, type, heading, orientation, speed, acceleration, change in acceleration, size, shape, etc. In some instances, characteristics may be input into a behavior prediction system software module which uses various behavior models based on object type to output a predicted future behavior for a detected object. In other instances, the characteristics may be put into one or more detection system software modules, such as a traffic light detection system software module configured to detect the states of known traffic signals, construction zone detection system software module configured to detect construction zones from sensor data generated by the one or more sensors of the vehicle as well as an emergency vehicle detection system configured to detect emergency vehicles from sensor data generated by sensors of the vehicle. Each of these detection system software modules may uses various models to output a likelihood of a construction zone or an object being an emergency vehicle. Detected objects, predicted future behaviors, various likelihoods from detection system software modules, the map information identifying the vehicle's environment, position information from the positioning system 170 identifying the location and orientation of the vehicle, a destination for the vehicle as well as feedback from various other systems of the vehicle may be input into a planning system software module of the planning system 168. The planning system may use this input to generate trajectories for the vehicle to follow for some brief period of time into the future based on a route generated by a routing module of the routing system 166. A control system software module of the autonomous control system 176 may be configured to control movement of the vehicle, for instance by controlling braking, acceleration and steering of the vehicle, in order to follow a trajectory.

The autonomous control system 176 may control the vehicle in an autonomous driving mode by controlling various components. For instance, by way of example, the autonomous control system 176 may navigate the vehicle to a destination location completely autonomously using data from the detailed map information and planning system 168. The autonomous control system 176 may use the positioning system 170 to determine the vehicle's location and perception system 172 to detect and respond to objects when needed to reach the location safely. Again, in order to do so, computing device 110 may generate trajectories and cause the vehicle to follow these trajectories, for instance, by causing the vehicle to accelerate (e.g., by supplying fuel or other energy to the engine or power system 174 by acceleration system 162), decelerate (e.g., by decreasing the fuel supplied to the engine or power system 174, changing gears, and/or by applying brakes by deceleration system 160), change direction (e.g., by turning the front or rear wheels of vehicle 100 by steering system 164), and signal such changes (e.g., by lighting turn signals 112 or 114 of the signaling system). Thus, the acceleration system 162 and deceleration system 160 may be a part of a drivetrain that includes various components between an engine of the vehicle and the wheels of the vehicle. Again, by controlling these systems, autonomous control system 176 may also control the drivetrain of the vehicle in order to maneuver the vehicle autonomously.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted as long as the resulting combination is according to the claims.

In order to determine when to use the turn signals 112, 114, the computing devices receive a trajectory. For instance, the planning system 168 of an autonomous vehicle may generate a trajectory for the vehicle to follow in order to follow a route to a destination generated by the routing system 166 of the vehicle. The planning system may then provide this trajectory to the autonomous driving system 176 as well as the computing devices 110. Accordingly, the computing devices 110 may receive this trajectory from the planning system 168 or may simply monitor the output of the planning system and retrieve new trajectories as they are generated.

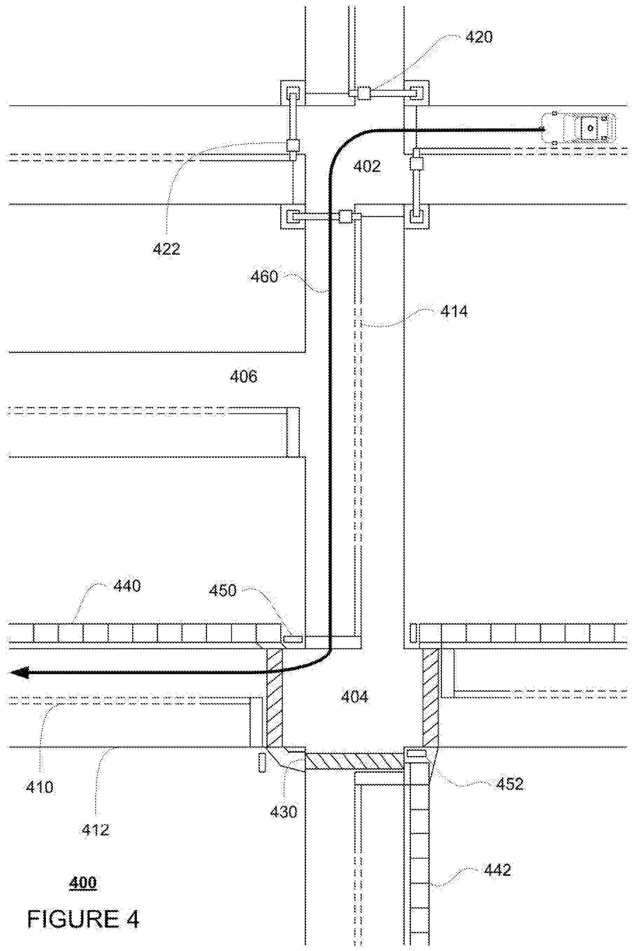

For demonstration purposes, FIGURE 4 depicts vehicle 100 being maneuvered on a section of roadway 400 including intersections 402 and 404 as well as side street 406. In example 400 of FIGURE 4, vehicle 100 and vehicle 400 are each approaching an intersection 402. In this example, intersections 402 and 404 correspond to the locations of intersections 202 and 204 of the map information 200, respectively. Similarly, lane lines 410, 412, and 414 correspond to the shape, location, and other characteristics of lane lines 210, 212, and 214, respectively. Similarly, crosswalk 430 corresponds to the shape, location, and other characteristics of crosswalk 230, respectively; sidewalks 440, 442 correspond to sidewalks 240, 242; traffic lights 420, 422 correspond to traffic lights 220, 222, respectively; and stop signs 450, 452 correspond to stop signs 250, 252, respectively. In this example, vehicle 100 is depicted following a trajectory 460 generated by the planning system 168. The trajectory 460 is configured to cause the vehicle to make a left turn at intersection 404 and a right turn at intersection 402.

One or more computing devices of the vehicle may then determine whether and when to activate the turn signals 112, 114. In order to do so, the latest trajectory may be traversed or processed starting from a point along the trajectory corresponding to the current location of the vehicle until some point in the future in order identify turning events corresponding to a location where the vehicle plans to turn. For instance, such turning events may be called "positive turning events" for which the vehicle will need to use a turn signal or which may require a turn signal. Each such positive turning event may also be associated with a direction for each positive turning event.

This point in the future may be determined based on a distance, for instance 50 meters or 100 meters, or time, for instance, 5 or 10 seconds. Of course, these values may even by dynamic, for example, such that the distance or time is greater or lesser depending upon the vehicle's current speed or expected future speed according to the trajectory. For instance, if the vehicle is driving slowly the value may be 50 meters or 5 seconds, and if the vehicle is driving at higher speeds, the value may be 100 meters or 10 seconds.

The positive turning events may be pre-categorized. For instance, positive turning events may include turns, mergers, pullovers, lane changes, lane splits, and nudging. A lane split may refer to when one lane turns into two lanes, and the vehicle has to use one or the other. Nudging may refer to a situation in which the vehicle partially changes lanes and returns to the vehicle's original lane, for instance, in order to avoid a parked vehicle, debris, or a turning vehicle.

Each of these categories of positive turning events may be identified in different ways. For instance, for a turn, the computing devices may analyze segments of a roadgraph of map information which the vehicle will traverse when following the trajectory. If those segments meet certain requirements, a turning event in the "turn" category may be identified. These requirements may include but are not limited to: the segments followed by the trajectory passing through an intersection and changing from one road to another, the trajectory moving from one segment of one road to another segment of another road, the heading of a lane at a starting location of a segment and the heading of a lane at an ending location of a segment changing by some threshold degree, which may indicate that the lane was a turning lane (either left or right) depending upon the direction of the change of heading. Mergers and lane splits may be identified based on identifying information in the roadgraph. Pullovers may be identified based on whether a pull over command or a pull over software module of the vehicle was used to generate the trajectory. Lane changes and nudging may be identified by comparing the trajectory to the map and looking for deviations from a lane and/or segment of the map information, and/or based on whether a lane change or nudging software module of the vehicle was used to generate the trajectory.

The direction of each positive turning event may be determined, for instance, based on a direction of a change in heading of the vehicle during the positive turning event. For instance, with a right turn, the vehicle's heading will be changed towards a right or clockwise direction. Similarly, with a left turn the vehicle's heading will be changed towards a left or counter-clockwise direction.

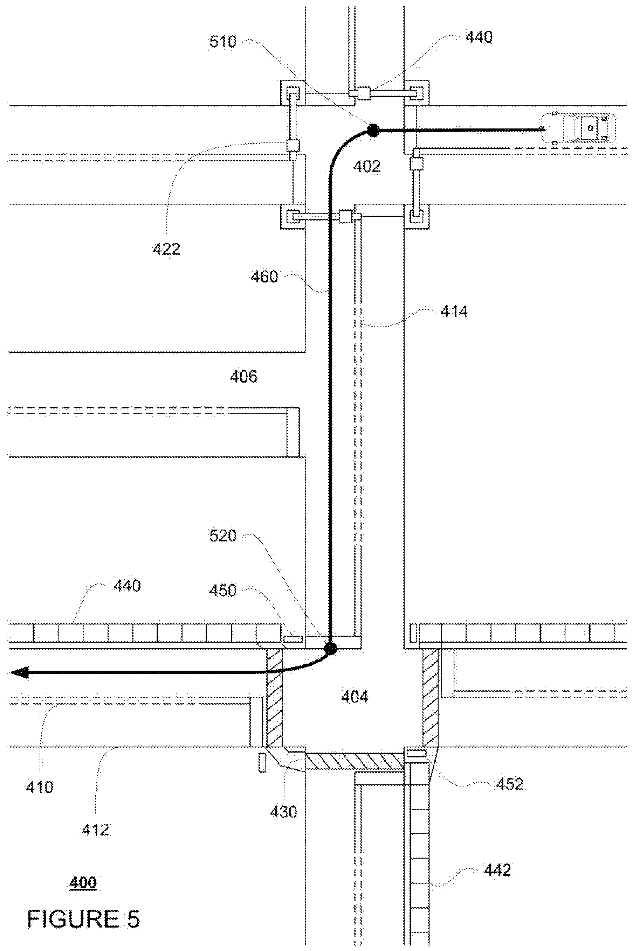

For instance, turning to FIGURE 5, by traversing the trajectory 460 starting from the current location of vehicle 100, the computing devices 110 may first identify a positive turning event 510 and subsequently identify a positive turning event 520. In each of these examples, the turning events may be identified by determining that the trajectory meets certain requirements, including that the trajectory 460 passes through intersection 404 and changes from one road to another and/or that the trajectory moves from one segment of one road to another segment of another (e.g. from segment 264 to 273 of FIGURE 2B), etc.

In addition, the directions of these positive turning events may be determined by the change in the vehicle's headings during the trajectory. For instance, for positive turning event 510, the vehicle's heading changes in a counter-clockwise direction corresponding to a left turn, and for positive turning event 520, the vehicle's heading change in a clockwise direction corresponding to a right turn.

Each identified positive turning event and its corresponding direction (i.e. left turn or right turn) may then be arranged in chronological order according to the trajectory. For instance, the positive turning events may be arranged chronologically starting with the positive turning events that are earliest in time along the trajectory. In the example of FIGURE 5, positive turning event 510 occurs earlier in time than positive turning event 520, such that the order of the turning events of trajectory 460 is positive turning event 510 and thereafter, positive turning event 520.

The computing devices 110 may then activate the vehicle's turn signals according to the order and direction of the positive turning events. A turn signal may be activated for a first positive turning event until that positive turning event is completed. For instance, the computing devices 110 may activate turn signals 112 for positive turning event 510. The turn signal for a next positive turning event may not be initiated until the turn signal for a prior positive turning event has been deactivated. In this regard, the turn signal 114 for positive turning event 520 would not be activated until the positive turning event 510 has been completed by the vehicle 100.

The length of time that the turn signal is activated need not be fixed. For instance, the length of time may be dependent upon the duration of the positive turning event as well as some period of time, some amount of distance, or a combination of these before the positive turning event is account to occur. For instance, a turn signal may be activated 5 seconds or 10 seconds or more or less (or 50 meters or 100 meters or more or less) before a positive turning event and may be deactivated once the positive turning event is completed. Thereafter, the turn signal may be activated for the next positive turning event, if it is within 5 seconds or may be delayed until the vehicle is within 5 seconds of the next positive turning event.

In examples that are according to claim 1, the vehicle may avoid signaling too soon for a turning event. For instance, if the vehicle is turning left, but there are two left turn options that the vehicle can take and the vehicle is going to take the second one, activating the left turn signal may suggest to other road users that the vehicle is going to turn sooner than actually planned. To address this, the computing devices may further analyze the trajectory to determine whether the trajectory includes a negative turning event located some threshold distance before the turning event. A negative turn event corresponding to a location along the trajectory where the vehicle could make a turn, but does not plan to make a turn, such as a turn onto another road which the vehicle will pass when following the trajectory, or rather a possible turning event where the vehicle will not need to use its turn signal as the vehicle will not be turning. The determination or identification of negative turning events, for instance identifying whether a lane and/or segment is a turn, merger, pullover, lane change, lane split, and nudging, may proceed similarly as described above for positive turning events positive and negative events by processing lanes and/or segments leaving from the trajectory.

These negative turning events might not only include turns that the vehicle could take from its current lane but also turns that could be taken from neighboring lanes (for instance, on a multi-lane road). For example, if the vehicle is stopped a red light of a large intersection in a straight-only lane, but a "neighboring" (e.g. and adjacent lane with the same general direction of traffic flow) dedicated turn lane allows a turn, the neighboring dedicated turn lane may be considered a negative turning event. In other words, even though it might not be legal to turn at the intersection the vehicle's current straight-only lane, other road users, such as pedestrians, bicyclists, and vehicles (with or without drivers) might still be confused or misled if one or more of the vehicle's turn signal was activated. As another example if there are two neighboring lanes, and at some point the lanes no longer become neighbors, such as a highway on or off ramp, this may also be considered a negative turning event.

This processing to identify negative turning events may be done in conjunction with the aforementioned processing to identify positive turning events. Thus, as noted above, the latest trajectory may be traversed or processed starting from a point along the trajectory corresponding to the current location of the vehicle until some point in the future in order identify any negative turning events. The direction of each negative turning event may be determined, for instance, based on a direction of a change in heading of the vehicle which would have occurred if the vehicle were to actually make the turn corresponding to the negative turning event as described with respect to positive turning events above. For instance, with a right turn, the vehicle's heading will be changed towards a right or clockwise direction. Similarly, with a left turn the vehicle's heading will be changed towards a left or counter-clockwise direction.

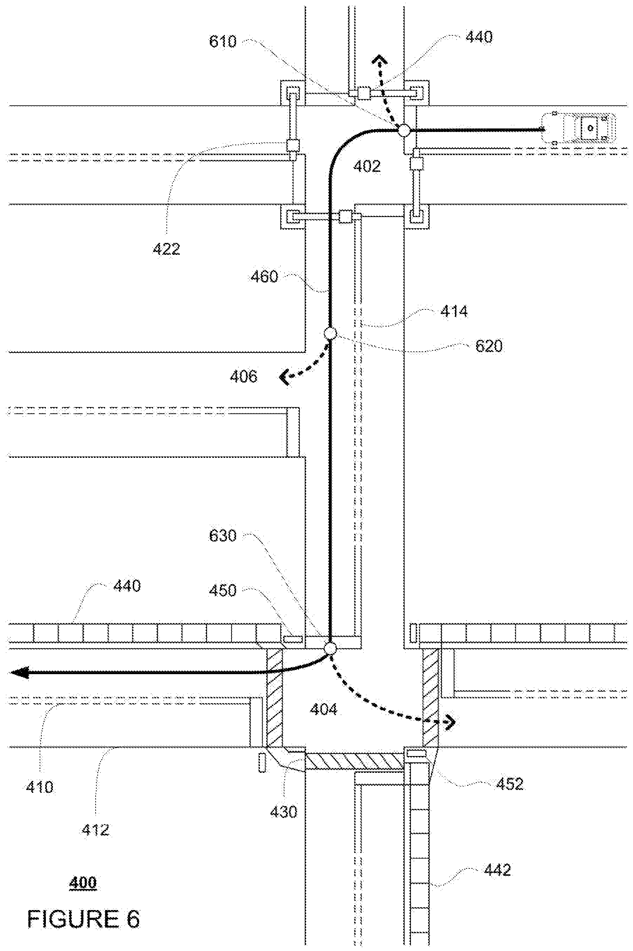

For instance, turning to FIGURE 6, by traversing the trajectory 460 starting from the current location of vehicle 100, the computing devices 110 may first identify a negative turning event 610, subsequently identify a negative turning event 620, and finally identify a negative turning event 630. In each of these examples, the turning events may be identified by determining that the vehicle will pass by another road onto which the vehicle could turn, but will not according to the trajectory. For instance, trajectory 460 passes through intersection 404 and turns left, which results in the negative turning event 610 for turning right. Trajectory also passes by the side street 406 and continues straight towards intersection 402, which results in the negative turning event 620 for turning right. Trajectory 460 also passes through intersection 402 and turns right, which results in the negative turning event 630 for turning left.

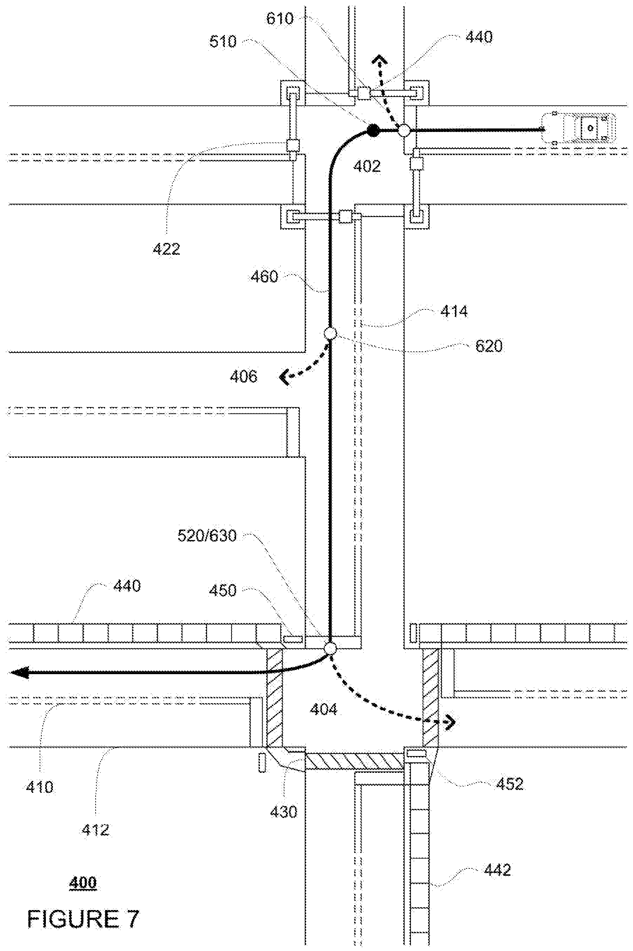

The identified negative turning events may then be ordered chronologically with the aforementioned identified positive turning events. Again, the positive turning events and negative turning events may be arranged chronologically starting with the events that are earliest in time along the trajectory. For instance, turning to FIGURE 7, trajectory 460 is depicted with both the positive turning events 510, 520 as well as the negative turning events 610, 620, 630. In this example, negative turning event 630 and positive turning event 520 overlap with one another.

The computing devices 110 may then use the list and order to determine when to activate a vehicle's turn signal, for instance, when the vehicle is operating in the autonomous driving mode. Again, a turn signal may be activated for a first positive turning event until that positive turning event is completed. The turn signal for a next event may not be initiated until the turn signal for a prior event has been deactivated. However, for any negative turning events in the list, the turn signal for the direction of the negative turning event may be suppressed thereby temporarily preventing the turn signal from being activated for a later positive turning event in the same direction as the negative turning event. In this regard, the determination of whether the trajectory includes a negative turning event may be used to activate or not activate (by way of suppression) a turn signal. The suppression may remain in place until the vehicle has reached or passed the turn for the negative turning event. For instance, the negative turning event 620 may be used to suppress activation of the right turn signal 114 until after vehicle 100 has passed by the side street 406. In this regard, the right turn signal 114 would not be activated for the positive turning event 520 until the vehicle 100 passes the side street 406 (or rather when an opportunity for the vehicle to make the right turn corresponding to the negative turning event 620 has passed).

Of course, if the next event in the list is a positive turning event in a direction that is different from the direction of the negative turning event, the turn signal for the direction that is different could be activated as described above. For instance, negative turning event 610 would only suppress the right turn signals 114, and thus, the computing devices 110 would still be able to activate the left turn signals 112 for the left turn at intersection 404 (or rather, positive turning event 510). Similarly, negative turning event 630 would only suppress the left turn signals 112, and thus, the computing devices 110 would still be able to activate the right turn signals 114 for the right turn at intersection 404 (or rather, positive turning event 520).

In some implementations, positive events may be given precedence over negative ones. For instance, when a negative turning event and a positive turning event occur at the same location, as in the example of negative turning event 630 and positive turning event 520, the positive turning event may be processed first. In this regard, negative turning event 630 would not necessarily suppress positive turning event 520 not only because they are in different directions, but also because these turning events are at the same location, and positive events take precedence. Thus, even where a negative event was in the same direction as a positive event, such as where the trajectory includes a "hard" or sharp right turn and a "soft" or slight right turn could be taken from the same location as the hard right turn, because the positive turning event would take precedence, the negative event would not suppress the turn signal for the hard right run event. This behavior may avoid suppression of turn signals at intersections with multiple turning options which would require the same direction of a turn signal.

According to claim 1, the type of, and optionally the distance to, a next positive turning event may be used to "override" or remove the suppression and thereby allow the turn signal to be activated. For instance, turns may be classified based on importance or number of lanes. For example, if the vehicle is going to make a right turn at a highway just after a side street to the right of the vehicle, the right turn at the highway may be used by the computing devices 110 to determine to override the suppression of the right turn signal caused by the side street. Alternatively, in an example that is useful for understanding the claimed subject matter, if the right turn for the highway is less than some distance or amount of time from the side street, such as 20 meters or 4 seconds, the right turn at the highway may be used by the computing devices 110 to determine to override the suppression of the right turn signal caused by the side street.

In some instances, negative turning events may also include driveways which the vehicle will pass when following the trajectory. Driveways may include residential and commercial driveways that are identified as such in the map information, and thus may include all or some driveways depending upon the information in the map. This may be especially useful in residential areas where there are a lot of driveways nearby one another or for entrances to larger commercial or industrial areas which may appear similar to roads.

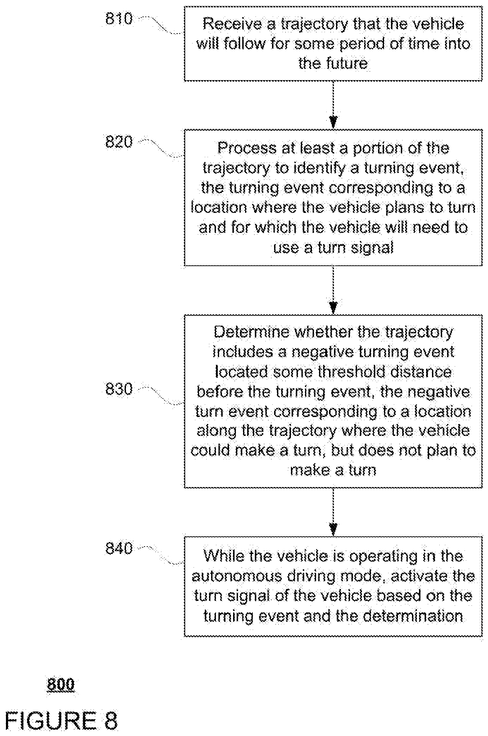

FIGURE 8 is an example flow diagram 800 which may be performed by one or more processors of one or more computing devices, such as processors 120 of computing devices 110, in to signal for turns for a vehicle having an autonomous driving mode. Turning to block 810, a trajectory that the vehicle will follow for some period of time into the future is received. At block 820, at least a portion of the trajectory is processed to identify a turning event. The turning event corresponds to a location where the vehicle plans to turn and for which the vehicle will need to use a turn signal. Whether the trajectory includes a negative turning event located some threshold distance before the turning event is determined at block 830. The negative turn event corresponding to a location along the trajectory where the vehicle could make a turn, but does not plan to make a turn. At block 840, while the vehicle is operating in the autonomous driving mode, the turn signal of the vehicle is activated based on the turning event and the determination.

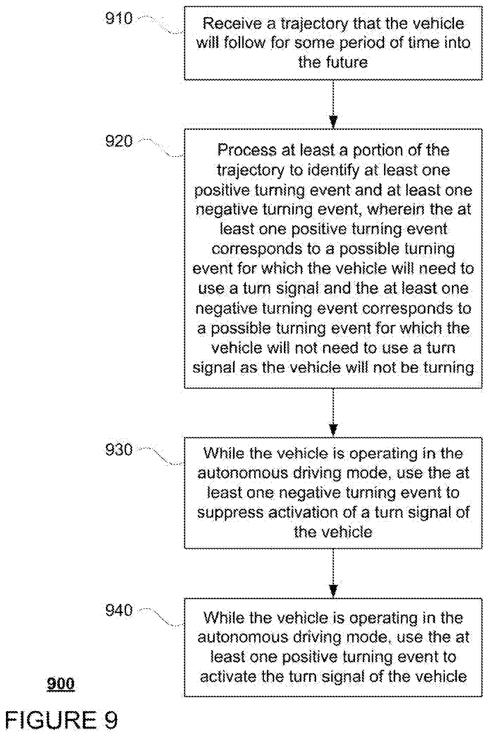

FIGURE 9 is an example flow diagram 900 which may be performed by one or more processors of one or more computing devices, such as processors 120 of computing devices 110, in to signal for turns for a vehicle having an autonomous driving mode. Turning to block 910, a trajectory that the vehicle will follow for some period of time into the future is received. At block 920, at least a portion of the trajectory is processed to identify at least one positive turning event and at least one negative turning event, wherein the at least one positive turning event corresponds to a possible turning event for which the vehicle will need to use a turn signal and the at least one negative turning event corresponds to a possible turning event for which the vehicle will not need to use a turn signal as the vehicle will not be turning. At block 930, while the vehicle is operating in the autonomous driving mode, the at least one negative turning event is used to suppress activation of a turn signal of the vehicle. At block 940, while the vehicle is operating in the autonomous driving mode, the at least one positive turning event is used to activate the turn signal of the vehicle.

The features described herein may allow an autonomous vehicle to activate and deactivate its turn signals in an effective and useful way. These features may allow the vehicle to address situations in which there are multiple events along a trajectory that may require a turn signal as well as situations in which there are multiple possible turns and the vehicle is only going to make one of them. The vehicle may also be prevented from signaling too early or too late, thereby reducing confusion with other drivers or vehicles which can be hazardous in certain situations.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method of signaling for turns for a vehicle (100) having an autonomous driving mode, the method comprising:
receiving, by one or more processors (120), a trajectory (460) that the vehicle (100) will follow for some period of time into the future;
processing, by the one or more processors (120), at least a portion of the trajectory (460) to identify a turning event (510, 520), the turning event (510, 520) corresponding to a location where the vehicle (100) plans to turn and for which the vehicle (100) will need to use a turn signal (112A, 112B, 114A, 114B);
determining, by the one or more processors (120), that the trajectory (460) includes a negative turning event (610, 620, 630) located some threshold distance before the turning event (510, 520), the negative turning event (610, 620, 630) corresponding to a location along the trajectory (460) where the vehicle (100) could make a turn, but does not plan to make a turn;
while the vehicle is operating in the autonomous driving mode:
using the negative turning event (610, 620, 630) to temporarily prevent activation of the turn signal (112A, 112B, 114A, 114B); and
determining, based on a type of the turning event (510, 520), whether to override the temporary prevention and to activate, by the one or more processors (120), the turn signal (112A, 112B, 114A, 114B) of the vehicle (100).

2. The method of claim 1, wherein processing at least the portion of the trajectory (460) includes traversing the trajectory (460) starting from a point along the trajectory and moving towards some point in the future along the trajectory (460).

3. The method of claim 1 or claim 2, wherein the determination indicates that the trajectory includes the negative turning event (610, 620, 630), the method further comprises determining a direction for the negative turning event (610, 620, 630), and wherein activating the turn signal based on the turning event (510, 520) is further based on the direction for the negative turning event (610, 620, 630).

4. The method of any preceding claim, wherein activating the turn signal of the vehicle is further based on a chronological order of the turning event (510, 520) and the negative turning event (610, 620, 630) with respect to the at least the portion of the trajectory (460).

5. The method of any preceding claim, further comprising:
processing at least the portion of the trajectory (460) to identify a second turning event;
determining a first direction of the negative turning event(610, 620, 630);
determining a second direction of the second turning event; and
when the second direction is different from the first direction and while the vehicle is operating in the autonomous driving mode, using the second turning event to activate a second turn signal of the vehicle independent of the temporary prevention of activation of the turn signal.

6. The method of any preceding claim, further comprising determining the at least the portion of the trajectory (460) based on a current speed of the vehicle.

7. The method of any of claims 1 to 6, further comprising determining the at least the portion of the trajectory (460) based on an amount of time and/or based on an amount of distance along the trajectory (460).

8. The method of any preceding claim, wherein the turning event (510, 520) corresponds to a turn from one road onto another road.

9. The method of claim 8, wherein identifying the turning event (510, 520) includes analyzing segments of a roadgraph of map information which the vehicle will traverse when following the trajectory (460) to determine whether the segments meet one or more of the following requirements:
the segments followed by the trajectory (460) pass through an intersection and change from one road to another;
the trajectory (460) moves from one segment of one road to another segment of another road; and/or
the heading of a lane at a starting location of a segment and the heading of a lane at an ending location of a segment change by a threshold degree.

10. The method of any of claims 1 to 7, wherein the turning event (510, 520) corresponds to a lane change.

11. The method of claim 10, wherein identifying the turning event (510, 520) includes comparing the trajectory (460) to a roadgraph of map information and identifying a deviation from a lane.

12. The method of any of claims 1 to 7, wherein the turning event (510, 520) corresponds to the vehicle partially leaving a lane and subsequently returning to the lane or wherein the turning event (510, 520) corresponds to a merge.

13. The method of any of claims 1 to 7, wherein the turning event (510, 520) corresponds to a lane split or wherein the turning event (510, 520) corresponds to the vehicle pulling over.

14. The method of any preceding claim, wherein the negative turning event (610, 620, 630) corresponds to a turn onto a road which the vehicle will pass when following the trajectory (460).

15. The method of any of claims 1 to 13, wherein the negative turning event (610, 620, 630) corresponds to a driveway which the vehicle will pass when following the trajectory (460).

## Patentansprüche

1. Verfahren zum Signalisieren von Abbiegemanövern für ein Fahrzeug (100) mit einem autonomen Fahrmodus, das Verfahren umfassend:
Empfangen, durch einen oder mehrere Prozessoren (120), einer Bewegungsbahn (460), der das Fahrzeug (100) für eine gewisse Zeit in der Zukunft folgen wird;
Verarbeiten, durch den einen oder die mehreren Prozessoren (120), zumindest eines Abschnitts der Bewegungsbahn (460), um ein Abbiegeereignis (510, 520) zu identifizieren, wobei das Abbiegeereignis (510, 520) einem Standort entspricht, an dem das Fahrzeug (100) plant, abzubiegen, und wobei das Fahrzeug (100) dafür einen Fahrtrichtungsanzeiger (112A, 112B, 114A, 114B) verwenden muss;
Ermitteln, durch den einen oder die mehreren Prozessoren (120), dass die Bewegungsbahn (460) ein Negativ-Abbiegeereignis (610, 620, 630) beinhaltet, das sich in einem gewissen Schwellenabstand vor dem Abbiegeereignis (510, 520) befindet, wobei das Negativ-Abbiegeereignis (610, 620, 630) einem Standort entlang der Bewegungsbahn (460) entspricht, an dem das Fahrzeug (100) abbiegen könnte, aber nicht plant, abzubiegen;
während das Fahrzeug in dem autonomen Fahrmodus betrieben wird:
Verwenden des Negativ-Abbiegeereignisses (610, 620, 630), um eine Aktivierung des Fahrtrichtungsanzeigers (112 A, 112B, 114 A, 114B) vorübergehend zu verhindern; und
Ermitteln, basierend auf einem Typ des Abbiegeereignisses (510, 520), ob die vorübergehende Verhinderung außer Kraft gesetzt werden soll und der Fahrtrichtungsanzeiger (112A, 112B, 114A, 114B) des Fahrzeugs (100) durch den einen oder die mehreren Prozessoren (120) aktiviert werden soll.

2. Verfahren nach Anspruch 1, wobei das Verarbeiten zumindest des Abschnitts der Bewegungsbahn (460) ein Durchlaufen der Bewegungsbahn (460) ausgehend von einem Punkt entlang der Bewegungsbahn und ein Bewegen hin zu einem gewissen Punkt in der Zukunft entlang der Bewegungsbahn (460) beinhaltet.

3. Verfahren nach Anspruch 1 oder Anspruch 2, wobei die Ermittlung angibt, dass die Bewegungsbahn das Negativ-Abbiegeereignis (610, 620, 630) beinhaltet, wobei das Verfahren ferner ein Ermitteln einer Richtung für das Negativ-Abbiegeereignis (610, 620, 630) umfasst, und wobei das Aktivieren des Fahrtrichtungsanzeigers basierend auf dem Abbiegeereignis (510, 520) ferner auf der Richtung für das Negativ-Abbiegeereignis (610, 620, 630) basiert.

4. Verfahren nach einem der vorhergehenden Ansprüche, wobei das Aktivieren des Fahrtrichtungsanzeigers des Fahrzeugs ferner auf einer zeitlichen Reihenfolge des Abbiegeereignisses (510, 520) und des Negativ-Abbiegeereignisses (610, 620, 630) in Bezug auf den zumindest einen Abschnitt der Bewegungsbahn (460) basiert.

5. Verfahren nach einem der vorhergehenden Ansprüche, ferner umfassend:
Verarbeiten zumindest des Abschnitts der Bewegungsbahn (460), um ein zweites Abbiegeereignis zu identifizieren; Ermitteln einer ersten Richtung des Negativ-Abbiegeereignisses (610, 620, 630); Ermitteln einer zweiten Richtung des zweiten Abbiegeereignisses; und, wenn sich die zweite Richtung von der ersten Richtung unterscheidet, und während das Fahrzeug in dem autonomen Fahrmodus betrieben wird, Verwenden des zweiten Abbiegeereignisses, um einen zweiten Fahrtrichtungsanzeiger des Fahrzeugs unabhängig von der vorübergehenden Verhinderung einer Aktivierung des Fahrtrichtungsanzeigers zu aktivieren.

6. Verfahren nach einem der vorhergehenden Ansprüche, ferner umfassend ein Ermitteln zumindest des Abschnitts der Bewegungsbahn (460) basierend auf einer aktuellen Geschwindigkeit des Fahrzeugs.

7. Verfahren nach einem der Ansprüche 1 bis 6, ferner umfassend ein Ermitteln zumindest des Abschnitts der Bewegungsbahn (460) basierend auf einem Zeitbetrag und/oder basierend auf einem Distanzbetrag entlang der Bewegungsbahn (460) .

8. Verfahren nach einem der vorhergehenden Ansprüche, wobei das Abbiegeereignis (510, 520) einem Abbiegen von einer Straße auf eine andere Straße entspricht.

9. Verfahren nach Anspruch 8, wobei das Identifizieren des Abbiegeereignisses (510, 520) ein Analysieren von Segmenten eines Straßendiagramms aus Karteninformationen, die das Fahrzeug durchqueren wird, wenn es der Bewegungsbahn (460) folgt, beinhaltet, um zu ermitteln, ob die Segmente eine oder mehrere der folgenden Anforderungen erfüllen:
die Segmente, denen die Bewegungsbahn (460) folgt, führen über eine Kreuzung und wechseln von einer Straße zu einer anderen;
die Bewegungsbahn (460) bewegt sich von einem Segment einer Straße zu einem anderen Segment einer anderen Straße; und/oder
die Richtung einer Fahrspur an einem Anfangsort eines Segments und die Richtung einer Fahrspur an einem Endort eines Segments ändern sich um ein Schwellenmaß.

10. Verfahren nach einem der Ansprüche 1 bis 7, wobei das Abbiegeereignis (510, 520) einem Fahrspurwechsel entspricht.

11. Verfahren nach Anspruch 10, wobei das Identifizieren des Abbiegeereignisses (510, 520) ein Vergleichen der Bewegungsbahn (460) mit einem Straßendiagramm aus Karteninformationen und ein Identifizieren einer Abweichung von einer Fahrspur beinhaltet.

12. Verfahren nach einem der Ansprüche 1 bis 7, wobei das Abbiegeereignis (510, 520) einem teilweisen Verlassen einer Fahrspur und einem anschließenden Zurückkehren in die Fahrspur durch das Fahrzeug entspricht, oder wobei das Abbiegeereignis (510, 520) einer Zusammenführung entspricht.

13. Verfahren nach einem der Ansprüche 1 bis 7, wobei das Abbiegeereignis (510, 520) einer Fahrspuraufteilung entspricht, oder wobei das Abbiegeereignis (510, 520) ein Heranfahren des Fahrzeugs an den Straßenrand entspricht.

14. Verfahren nach einem der vorhergehenden Ansprüche, wobei das Negativ-Abbiegeereignis (610, 620, 630) eine Abbiegen auf eine Straße entspricht, an der das Fahrzeug vorbeifahren wird, wenn es der Bewegungsbahn (460) folgt.

15. Verfahren nach einem der Ansprüche 1 bis 13, wobei das Negativ-Abbiegeereignis (610, 620, 630) einer Zufahrt entspricht, an der das Fahrzeug vorbeifahren wird, wenn es der Bewegungsbahn (460) folgt.

## Revendications

1. Procédé de signalisation de clignotants d'un véhicule (100) ayant un mode conduite autonome, le procédé comprenant :
la réception, par un ou plusieurs processeurs (120), d'une trajectoire (460) que le véhicule (100) suivra pendant une certaine période dans le futur ;
le traitement, par les un ou plusieurs processeurs (120), d'au moins une portion de la trajectoire (460) pour identifier un événement de virage (510, 520), l'événement de virage (510, 520) correspondant à un emplacement où le véhicule (100) envisage de tourner et pour lequel le véhicule (100) devra utiliser un signal clignotant (112A, 112B, 114A, 114B) ;
la détermination, par les un ou plusieurs processeurs (120), du fait que la trajectoire (460) comprend un événement de virage négatif (610, 620, 630) situé à une distance seuil avant l'événement de virage (510, 520), l'événement de virage négatif (610, 620, 630) correspondant à un emplacement sur la trajectoire (460) auquel le véhicule (100) pourrait effectuer un virage, mais ne prévoit pas de faire un virage ;
alors que le véhicule fonctionne en mode de conduite autonome :
l'utilisation de l'événement de virage négatif (610, 620, 630) pour bloquer temporairement l'activation du signal clignotant (112A, 112B, 114A, 114B) ; et
la détermination, sur la base d'un type de l'événement de virage (510, 520), s'il faut annuler le blocage temporaire et activer, par les un ou plusieurs processeurs (120), le signal clignotant (112A, 112B, 114A, 114B) du véhicule (100).

2. Procédé selon la revendication 1, dans lequel le traitement d'au moins la portion de la trajectoire (460) comprend la traversée de la trajectoire (460) à partir d'un point sur la trajectoire et le déplacement vers un certain point dans le futur sur la trajectoire (460).

3. Procédé selon la revendication 1 ou la revendication 2, dans lequel la détermination indique que la trajectoire comprend l'événement de virage négatif (610, 620, 630), le procédé comprend en outre la détermination d'une direction pour l'événement de virage négatif (610, 620, 630), et dans lequel l'activation du signal clignotant sur la base de l'événement de virage (510, 520) est en outre basée sur la direction de l'événement de virage négatif (610, 620, 630).

4. Procédé selon l'une quelconque des revendications précédentes, dans lequel l'activation du signal clignotant du véhicule est en outre basée sur un ordre chronologique de l'événement de virage (510, 520) et de l'événement de virage négatif (610, 620, 630) par rapport à l'au moins une portion de la trajectoire (460).

5. Procédé selon l'une quelconque des revendications précédentes, comprenant en outre :
le traitement d'au moins la portion de la trajectoire (460) pour identifier un deuxième événement de virage ; la détermination d'une première direction de l'événement de virage négatif (610, 620, 630) ; la détermination d'une deuxième direction du deuxième événement de virage ; et lorsque la deuxième direction est différente de la première direction et tandis que le véhicule fonctionne dans le mode de conduite autonome, l'utilisation du deuxième événement de virage pour activer un deuxième signal clignotant du véhicule indépendamment du blocage temporaire de l'activation du signal clignotant.

6. Procédé selon l'une quelconque des revendications précédentes, comprenant en outre la détermination d'au moins la portion de la trajectoire (460) sur la base d'une vitesse actuelle du véhicule.

7. Procédé selon l'une quelconque des revendications 1 à 6, comprenant en outre la détermination de l'au moins la portion de la trajectoire (460) sur la base d'une durée et/ou sur la base d'une distance le long de la trajectoire (460).

8. Procédé selon l'une quelconque des revendications précédentes, dans lequel l'événement de virage (510, 520) correspond à un virage d'une route sur une autre route.

9. Procédé selon la revendication 8, dans lequel l'identification de l'événement de virage (510, 520) comprend l'analyse de segments d'une carte routière d'informations cartographiques que le véhicule traversera en suivant la trajectoire (460) pour déterminer si les segments satisfont à une ou plusieurs des exigences suivantes :
les segments suivis par la trajectoire (460) passent par une intersection et passent d'une route à une autre ;
la trajectoire (460) se déplace d'un segment d'une route à un autre segment d'une autre route ; et/ou
le cap d'une voie au niveau d'un emplacement de départ d'un segment et le cap d'une voie au niveau d'un emplacement de fin d'un segment changent d'un degré de seuil.

10. Procédé selon l'une quelconque des revendications 1 à 7, dans lequel l'événement de virage (510, 520) correspond à un changement de voie.

11. Procédé selon la revendication 10, dans lequel l'identification de l'événement de virage (510, 520) comprend la comparaison de la trajectoire (460) à une carte routière d'informations cartographiques et l'identification d'un écart par rapport à une voie.

12. Procédé selon l'une quelconque des revendications 1 à 7, dans lequel l'événement de virage (510, 520) correspond au fait que le véhicule quitte partiellement une voie et revient ensuite à la voie ou dans lequel l'événement de virage (510, 520) correspond à une fusion.

13. Procédé selon l'une quelconque des revendications 1 à 7, dans lequel l'événement de virage (510, 520) correspond à une division de voie ou dans lequel l'événement de virage (510, 520) correspond au fait que le véhicule se gare.

14. Procédé selon l'une quelconque des revendications précédentes, dans lequel l'événement de virage négatif (610, 620, 630) correspond à un virage sur une route que le véhicule traversera en suivant la trajectoire (460).

15. Procédé selon l'une quelconque des revendications 1 à 13, dans lequel l'événement de virage négatif (610, 620, 630) correspond à une voie de circulation que le véhicule va traversera en suivant la trajectoire (460).
